# EUROPEAN PATENT APPLICATION

(11) **EP 3 128 018 A1**
(43) Date of publication of application: **08.02.2017**
(21) Application number: 14907542.6
(22) Date of filing: 05.12.2014
(51) Int. Cl.: C22B 23/00, B01D 21/30, C02F 1/52, C22B 1/00

(54) **APPARATUS FOR PRODUCING ORE SLURRY AND PROCESS FOR PRODUCING ORE SLURRY**

(71) Applicant: Sumitomo Metal Mining Co., Ltd., Tokyo 105-8716 (JP)
(72) Inventor: YAMAGUCHI, Youhei, Tokyo 105-8716 (JP); NAKANO, Osamu, Tokyo 105-8716 (JP)
(74) Representative: Jones, Nicholas Andrew
(86) International application number: PCT/JP2014/082196
(87) International publication number: WO 2016/088240

(57) **Abstract**

To provide an ore slurry manufacturing facility and an ore slurry manufacturing method capable of manufacturing ore slurry having a high solid constituent ratio and a high specific gravity while maintaining a slurry treatment amount.

An ore slurry manufacturing facility A comprises: a first thickener 1 for obtaining intermediate ore slurry by preliminarily concentrating raw ore slurry; and a second thickener 2 for obtaining concentrated ore slurry by concentrating the intermediate ore slurry. The second thickener 2 has higher thickening effect than the first thickener 1. The intermediate ore slurry resulting from the preliminary concentration by the first thickener 1 is supplied to the second thickener 2. This increases settling speed of the ore slurry at the second thickener 2, so that a slurry treatment amount can be increased. The second thickener 2 having high thickening effect is arranged at the latter stage, so that concentrated ore slurry having a high solid constituent ratio and a high specific gravity can be manufactured.

## Description

### Technical Field

This invention relates to an ore slurry manufacturing facility and an ore slurry manufacturing method. More specifically, this invention relates to an ore slurry manufacturing facility and an ore slurry manufacturing method for manufacturing slurry of a nickel oxide ore to be fed to a high-temperature and pressure sulfuric acid leaching step during hydrometallurgy using high-temperature and pressure sulfuric acid leaching to recover nickel from the nickel oxide ore, for example.

### Background Art

High-temperature and pressure sulfuric acid leaching, which is high pressure acid leaching (HPAL) using sulfuric acid, is known as hydrometallurgy to recover a valuable metal such as nickel, cobalt, etc. from a low-grade nickel oxide ore represented by a limonite ore.

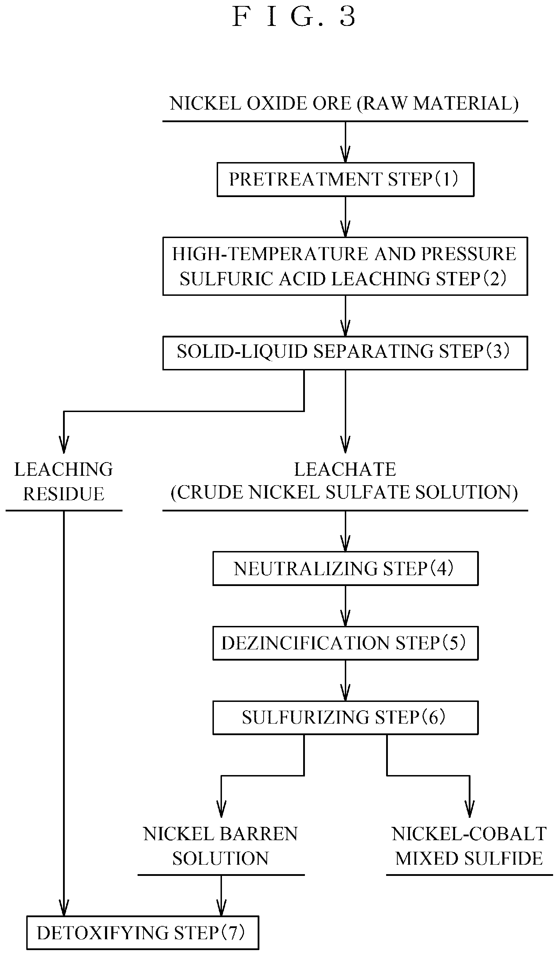

As shown in Fig. 3, hydrometallurgy to obtain nickel-cobalt mixed sulfide from a nickel oxide ore includes a pretreatment step (1), a high-temperature and pressure sulfuric acid leaching step (2), a solid-liquid separating step (3), a neutralizing step (4), a dezincification step (5), a sulfurizing step (6), and a detoxifying step (7) (see patent literature 1, for example).

In the pretreatment step (1), the nickel oxide ore is crushed and sized to manufacture ore slurry. In the high-temperature and pressure sulfuric acid leaching step (2), sulfuric acid is added to the ore slurry obtained in the pretreatment step (1). Then, the ore slurry is agitated at a temperature from 220 to 280°C for high-temperature and pressure acid leaching, thereby obtaining leached slurry. In the solid-liquid separating step (3), the leached slurry obtained in the high-temperature and pressure sulfuric acid leaching step (2) is separated into a solid and a liquid to obtain a leachate containing nickel and cobalt (hereinafter called a "crude nickel sulfate solution") and a leaching residue.

In the neutralizing step (4), the crude nickel sulfate solution obtained in the solid-liquid separating step (3) is neutralized. In the dezincification step (5), hydrogen sulfide gas is added to the crude nickel sulfate solution neutralized in the neutralizing step (4) to remove zinc as a precipitate of zinc sulfide. In the sulfurizing step (6), hydrogen sulfide gas is added to liquid resulting from the dezincification obtained in the dezincification step (5) to obtain nickel-cobalt mixed sulfide and a nickel barren solution. In the detoxifying step (7), the leaching residue generated in the solid-liquid separating step (3) and the nickel barren solution generated in the sulfurizing step (6) are detoxified.

According to the aforementioned hydrometallurgy using high-temperature and pressure sulfuric acid leaching to recover nickel from a nickel oxide ore, the nickel oxide ore is crushed, classified into a given size or less using a wet sieve, slurried, and the resultant ore slurry is fed to a high-temperature and pressure sulfuric acid leaching step. The ore slurry fed to the high-temperature and pressure sulfuric acid leaching step is prepared by blending several types of nickel oxide ores in such a manner that acid consumption in the high-temperature and pressure sulfuric acid leaching step, a nickel concentration in a resultant leachate, and the concentration of other impurities become predetermined values.

The solid constituent ratio of the ore slurry (a weight ratio of a solid constituent (ore) in the ore slurry) obtained at this stage is low in a range from 10 to 20%. Hence, feeding the ore slurry as it is to the high-temperature and pressure sulfuric acid leaching step reduces a nickel concentration in a step performed after the high-temperature and pressure leaching step. This requires a larger liquid amount for treating the same amount of nickel, failing to recover nickel efficiently. In response, measure is taken by increasing the solid constituent ratio of the ore slurry by using a thickener and then feeding the ore slurry to the high-temperature and pressure sulfuric acid leaching step. This increases the amount of nickel to be passed to the high-temperature and pressure sulfuric acid leaching step per unit time to increase nickel recovery efficiency.

Increase in the solid constituent ratio of the ore slurry to be fed to the high-temperature and pressure sulfuric acid leaching step can increase the amount of nickel to be passed to the high-temperature and pressure sulfuric acid leaching step per unit time. However, if a solid constituent ratio is too high, the viscosity of the ore slurry is increased. This may make it difficult to supply a liquid due to the limitation of a pump capability or may block a pipe. Thus, the solid constituent ratio of the ore slurry is adjusted so as to be maintained at an optimum value (40-45%).

Thickening behavior differs depending on an ore type. Hence, the solid constituent ratio of ore slurry obtained by using a thickener depends on the types of blended ores, a blend ratio, the type of a flocculant used for thickening, or the amount of addition of the flocculant, for example. Thus, according to a conventional way of obtaining ore slurry having an intended solid constituent ratio, the type or the amount of addition of a flocculant have been adjusted by referring to past data or an empirical rule of a worker in accordance with the types of blended ores or a blend ratio.

However, changing an ore type has made it difficult to adjust a flocculant or has reduced the solid constituent ratio or the specific gravity of ore slurry in some cases. Even with the same ore type, a silicon grade that affects thickening behavior may change largely. In some cases, this has also become a cause for reduction in the solid constituent ratio or the specific gravity of ore slurry.

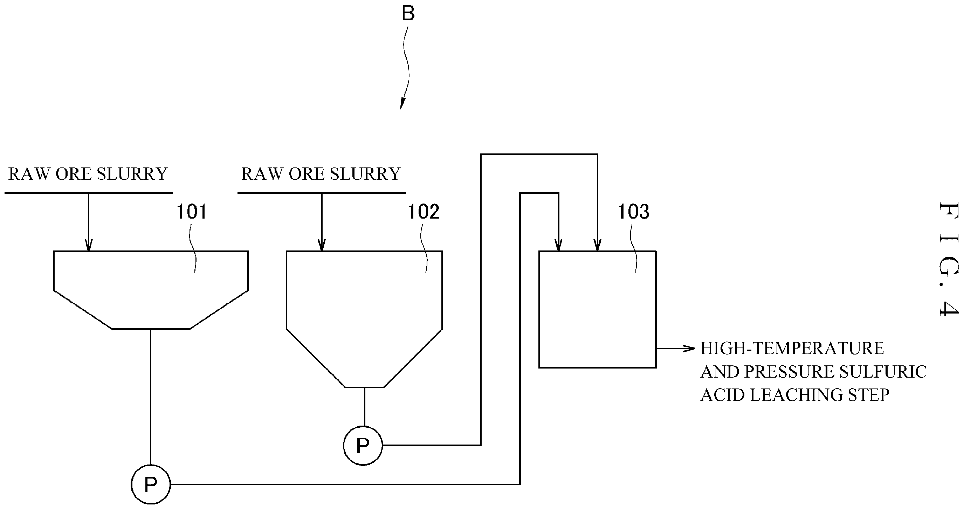

As shown in Fig. 4, a conventional ore slurry manufacturing facility B includes a plurality of thickeners 101 and 102 connected in parallel prepared in response to a requested slurry treatment amount. Ore slurry obtained from each of the thickeners 101 and 102 is stored temporarily in an ore slurry reservoir 103 and supplied to a high-temperature and pressure sulfuric acid leaching step.

This parallel connection of the plurality of thickeners 101 and 102 can increase a slurry treatment amount. However, this increases change in the solid constituent ratio or the specific gravity of ore slurry compared to the case of using of a single thickener, disadvantageously making adjustment more difficult.

### Citation List

### Patent Literature

Patent Literature 1: Japanese Patent Application Publication No. 2005-350766

### Summary of Invention

### Technical Problem

In view of the aforementioned circumstances, this invention is intended to provide an ore slurry manufacturing facility and an ore slurry manufacturing method capable of manufacturing ore slurry having a high solid constituent ratio and a high specific gravity while maintaining a slurry treatment amount.

### Solution to Problem

An ore slurry manufacturing facility according to a first invention comprises: a first thickener for obtaining intermediate ore slurry by preliminarily concentrating raw ore slurry; and a second thickener for obtaining concentrated ore slurry by concentrating the intermediate ore slurry. The second thickener has higher thickening effect than the first thickener.

An ore slurry manufacturing facility according to a second invention is characterized in that, in the first invention, a flocculant is added to the first thickener so as to provide the intermediate ore slurry with a solid constituent ratio of 35-40%.

An ore slurry manufacturing method according to a third invention comprises: obtaining intermediate ore slurry by preliminarily concentrating raw ore slurry by using a first thickener; and obtaining concentrated ore slurry by concentrating the intermediate ore slurry by using a second thickener having higher thickening effect than the first thickener.

An ore slurry manufacturing method according to a fourth invention is characterized in that, in the third invention, a flocculant to be added to the first thickener is adjusted so as to provide the intermediate ore slurry with a solid constituent ratio of 35-40%.

### Advantageous Effects of Invention

According to the first invention, the intermediate ore slurry resulting from the preliminary concentration by the first thickener is supplied to the second thickener to increase settling speed of the ore slurry at the second thickener. This can reduce a water area required for settling of particles at the second thickener, so that a slurry treatment amount can be increased. Further, the second thickener having high thickening effect is arranged at the latter stage, so that concentrated ore slurry having a high solid constituent ratio and a high specific gravity can be manufactured.

According to the second invention, the intermediate ore slurry has a solid constituent ratio of 35-40%. This increases settling speed of the ore slurry at the second thickener, so that a slurry treatment amount can be increased.

According to the third invention, the intermediate ore slurry resulting from the preliminary concentration by the first thickener is supplied to the second thickener to increase settling speed of the ore slurry at the second thickener. This can reduce a water area required for settling of particles at the second thickener, so that a slurry treatment amount can be increased. Further, the second thickener having high thickening effect is arranged at the latter stage, so that concentrated ore slurry having a high solid constituent ratio and a high specific gravity can be manufactured.

According to the fourth invention, the intermediate ore slurry has a solid constituent ratio of 35-40%. This increases settling speed of the ore slurry at the second thickener, so that a slurry treatment amount can be increased.

### Brief Description of Drawings

Fig. 1 explains an ore slurry manufacturing facility according to an embodiment of this invention.
Fig. 2(A) is a graph showing the solid constituent ratio relative to a silicon grade of ore slurry obtained in each of Working Example and Comparative Example, and Fig. 2(B) is a graph showing the specific gravity relative to a silicon grade of this ore slurry.
Fig. 3 is an entire process drawing of hydrometallurgy using high-temperature and pressure sulfuric acid leaching.
Fig. 4 explains a conventional ore slurry manufacturing facility.

### Description of Embodiments

An embodiment of this invention is described next by referring to the drawings.

An ore slurry manufacturing facility according to the embodiment of this invention is used for manufacturing slurry of a nickel oxide ore to be fed to a high-temperature and pressure sulfuric acid leaching step during hydrometallurgy using high-temperature and pressure sulfuric acid leaching to recover nickel from the nickel oxide ore. Specifically, by using raw ore slurry resulting from crushing, classifying, and slurrying nickel oxide ore, the ore slurry manufacturing facility concentrates the raw ore slurry so as to achieve an intended solid constituent ratio and an intended specific gravity, thereby manufacturing concentrated ore slurry.

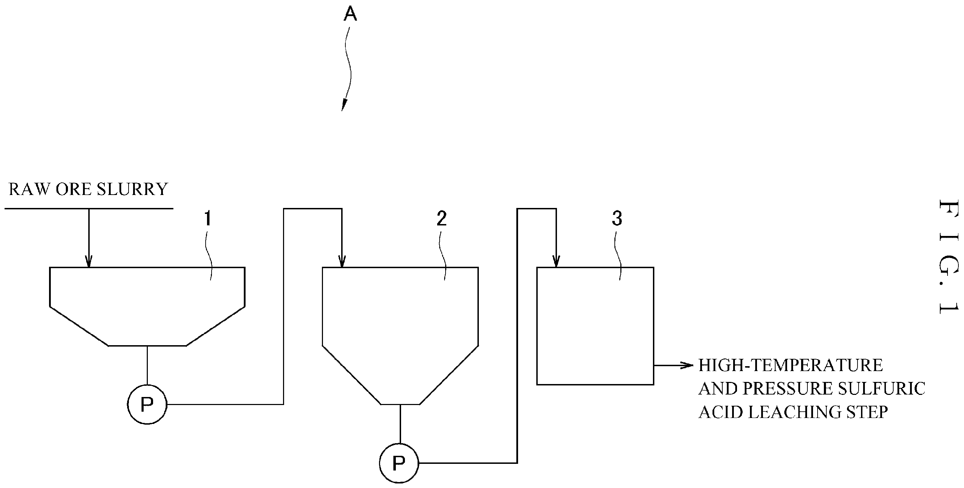

As shown in Fig. 1, an ore slurry manufacturing facility A according to this embodiment includes a first thickener 1, a second thickener 2, and an ore slurry reservoir 3.

Each of the thickeners 1 and 2 includes a thickener body and a rake to rotate inside the thickener body. The thickener body has a cylindrical outer frame and a conical bottom recessed deeply at the center. Ore slurry supplied to the thickener body settles out and is flocculated to form a supernatant liquid part in an upper area and a settling concentrated part in a lower area. Concentrated ore slurry is recovered through a slurry recovery port provided at a lowermost part of the thickener body. For enhancing the settling performance of the ore slurry, a flocculant is added to the thickener body to form floc. Rotating the rake slowly facilitates settling concentration of the ore slurry at the settling concentrated part to ensure a uniform deposition condition.

The first and second thickeners 1 and 2 are connected in series. Raw ore slurry is supplied to the first thickener 1 at the former stage. Intermediate ore slurry obtained from the first thickener 1 is supplied to the second thickener 2 at the latter stage. Concentrated ore slurry obtained from the second thickener 2 is supplied to the ore slurry reservoir 3 and temporarily stored therein. Then, the concentrated ore slurry is fed to the high-temperature and pressure sulfuric acid leaching step.

In this description, ore slurry supplied to the first thickener 1 is called "raw ore slurry," ore slurry obtained from the first thickener 1 is called "intermediate ore slurry," and ore slurry obtained from the second thickener 2 is called "concentrated ore slurry."

A thickener having higher thickening effect than the first thickener 1 is used as the second thickener 2. The thickening effect mentioned herein means a degree of the solid constituent ratio and a degree of the specific gravity of resultant ore slurry. High thickening effect means that resultant ore slurry is allowed to have a high solid constituent ratio and a high specific gravity. The thickening effect depends on the shape or the size, etc. of a thickener.

Raw ore slurry supplied to the first thickener 1 is formed by crushing nickel oxide ore, classifying the crushed nickel oxide ore into a given size or less using a wet sieve, blending several types of nickel oxide ores, and slurrying the resultant blend. The raw ore slurry has a solid constituent ratio of 10-20%.

The first thickener 1 preliminarily concentrates the raw ore slurry to obtain intermediate ore slurry. Preferably, the type of a flocculant or the amount of the flocculant to be added to the first thickener 1 is adjusted so as to provide the intermediate ore slurry with a solid constituent ratio of 35-40%.

The resultant intermediate ore slurry is supplied to the second thickener 2 having high thickening effect and the supplied intermediate ore slurry is concentrated to obtain concentrated ore slurry. The concentrated ore slurry has a solid constituent ratio of 40-45%. The concentrated ore slurry is stored temporarily in the ore slurry reservoir 3 and then fed to the high-temperature and pressure sulfuric acid leaching step.

As described above, the intermediate ore slurry resulting from the preliminary concentration by the first thickener 1 is supplied to the second thickener 2 to increase settling speed of the ore slurry at the second thickener 2. This can reduce a water area required for settling of particles at the second thickener 2, so that a slurry treatment amount can be increased at the second thickener 2. In this way, a slurry treatment amount in the entire ore slurry manufacturing facility A can be increased. Further, setting the solid constituent ratio of the intermediate ore slurry of 35-40% increases settling speed of the ore slurry at the second thickener 2. This can also increase a slurry treatment amount. In this way, a slurry treatment amount can be maintained as large as an amount obtained by a conventional ore slurry manufacturing facility including a plurality of thickeners connected in parallel.

The second thickener 2 having high thickening effect is arranged at the latter stage. This makes it possible to manufacture concentrated ore slurry having a high solid constituent ratio and a high specific gravity.

Additionally, the series connection of the first and second thickeners 1 and 2 reduces change in the solid constituent ratio or the specific gravity of ore slurry, compared to the parallel connection of a plurality of thickeners. This facilitates adjustment of a flocculant, etc.

### Examples

### (Solid Constituent Ratio and Specific Gravity)

Ore slurry was manufactured by using each of an ore slurry manufacturing facility including the aforementioned first and second thickeners 1 and 2 connected in series (Working Example) and an ore slurry manufacturing facility including the first and the second thickeners 1 and 2 connected in parallel (Comparative Example). Specifically, the ore slurry manufacturing facility according to Working Example is the ore slurry manufacturing facility A according to the aforementioned embodiment shown in Fig. 1. The ore slurry manufacturing facility according to Comparative Example is the ore slurry manufacturing facility B having the conventional structure shown in Fig. 4. The first thickener 1 according to Working Example and the first thickener 101 according to Comparative Example are the same and have the same thickening effect. The second thickener 2 according to Working Example and the second thickener 102 according to Comparative Example are the same and have the same thickening effect.

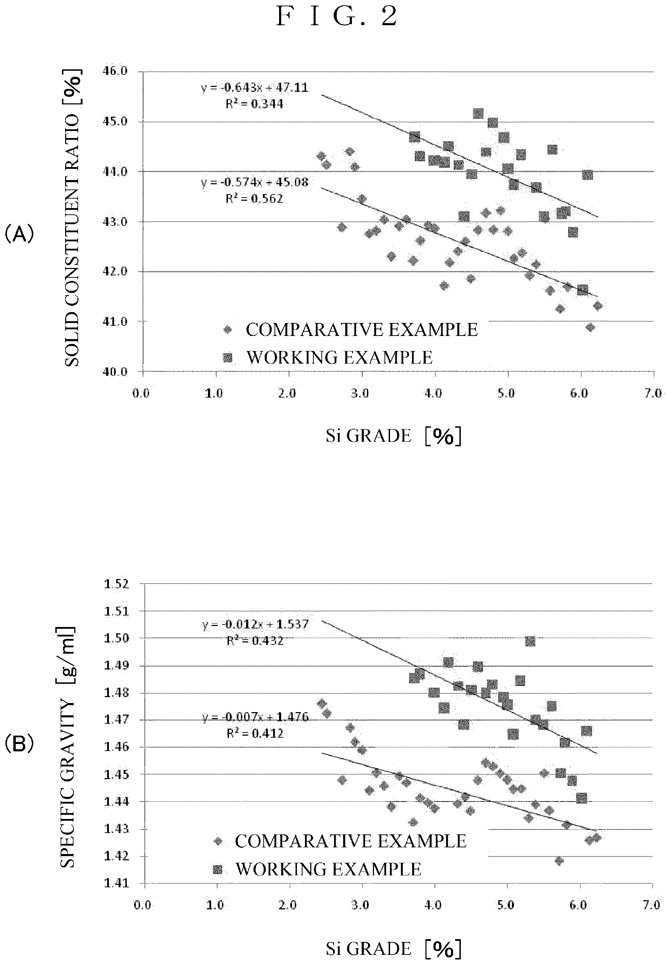

Fig. 2(A) is a graph showing the solid constituent ratio relative to a silicon grade of the ore slurry obtained by each of Working Example and Comparative Example. Fig. 2(B) is a graph showing the specific gravity relative to a silicon grade of this ore slurry.

As understood from Figs. 2(A) and 2(B), according to each of Working Example and Comparative Example, a higher silicon grade results in a lower solid constituent ratio and a lower specific gravity. However, with the same silicon grade, Working Example is shown to achieve a higher solid constituent ratio and a higher specific gravity than Comparative Example. In this way, the ore slurry manufacturing facility A according to the aforementioned embodiment was confirmed to be capable of manufacturing ore slurry having a high solid constituent ratio and a high specific gravity.

### (Slurry Treatment Amount)

In Working Example described above, the amount of a flocculant to be added to the first thickener 1 was adjusted to make the solid constituent ratio of intermediate ore slurry of 35-40%. In each of Working Example and Comparative Example, the ore slurry manufacturing facility was operated in such a manner that slurry was supplied to the high-temperature and pressure sulfuric acid leaching step by an amount of 250 m³/h. Table 1 shows the specific gravity and the flow rate of slurry supplied to each thickener, those of slurry ejected from each thickener, and those of ore slurry in the ore slurry reservoir according to each of Working Example and Comparative Example. The specific gravity of raw ore slurry was 1.20 t/m³.

According to Working Example, the first thickener 1 concentrated the raw ore slurry having a specific gravity of 1.20 t/m³ to obtain intermediate ore slurry having a specific gravity of 1.38 t/m³. The second thickener 2 concentrated the intermediate ore slurry having a specific gravity of 1.38 t/m³ to obtain concentrated ore slurry having a specific gravity of 1.51 t/m³. By setting the amount of the intermediate ore slurry to be supplied to the second thickener 2 at 618 m³/h, a target slurry supply amount of 250 m³/h was achieved.

According to Comparative Example, the first thickener 101 concentrated the raw ore slurry having a specific gravity of 1.20 t/m³ to obtain ore slurry having a specific gravity of 1.38 t/m³. The second thickener 102 concentrated the raw ore slurry having a specific gravity of 1.20 t/m³ to obtain ore slurry having a specific gravity of 1.51 t/m³ and a solid constituent ratio of 44%. By setting the amount of the raw ore slurry to be supplied to the second thickener 102 at 656 m³/h, ore slurry at a flow rate of 179 m³/h was obtained. A shortfall from the target slurry supply amount of 250 m³/h was compensated for by the first thickener 101. Specifically, ore slurry at a flow rate of 71 m³/h was obtained from the first thickener 101. In the ore slurry reservoir 103, the ore slurry obtained from the first thickener 101 and the ore slurry obtained from the second thickener 102 were mixed to obtain ore slurry having a specific gravity of 1.42 t/m³ and a solid constituent ratio of 42%.

As understood from the foregoing, according to Working Example, even with an amount of supply to the second thickener 2 smaller than that of Comparative Example, an ejection amount can still be increased, so that a target slurry supply amount can be achieved. This is considered to result from the following reason. The intermediate ore slurry resulting from the preliminary concentration is supplied to the second thickener 2 to increase settling speed of the ore slurry at the second thickener 2. This can reduce a water area required for settling of particles at the second thickener 2, so that a slurry treatment amount can be increased.

As described above, the ore slurry manufacturing facility A according to the aforementioned embodiment was confirmed to be capable of increasing a slurry treatment amount and capable of maintaining a slurry treatment amount as large as an amount obtained by an ore slurry manufacturing facility having the conventional structure.

**Table 1**

| | | Working Example | | Comparative Example | |
|---|---|---|---|---|---|
| | | Specific gravity [t/m³] | Flow rate [m³/h] | Specific gravity [t/m³] | Flow rate [m³/h] |
| First thickener | Supply | 1.20 | - | 1.20 | - |
| | Eject | 1.38 | 618 | 1.38 | 71 |
| Second thickener | Supply | 1.38 | 618 | 1.20 | 656 |
| | Eject | 1.51 | 250 | 1.51 | 179 |
| Ore slurry reservoir | | 1.51 | 250 | 1.42 | 250 |

### Reference Signs List

- A: Ore slurry manufacturing facility
- 1: First thickener
- 2: Second thickener
- 3: Ore slurry reservoir

## Claims

1. An ore slurry manufacturing facility, comprising:
a first thickener for obtaining intermediate ore slurry by preliminarily concentrating raw ore slurry; and
a second thickener for obtaining concentrated ore slurry by concentrating the intermediate ore slurry, the second thickener having higher thickening effect than the first thickener.

2. The ore slurry manufacturing facility according to claim 1, wherein a flocculant is added to the first thickener so as to provide the intermediate ore slurry with a solid constituent ratio of 35-40%.

3. An ore slurry manufacturing method, comprising:
obtaining intermediate ore slurry by preliminarily concentrating raw ore slurry by using a first thickener; and
obtaining concentrated ore slurry by concentrating the intermediate ore slurry by using a second thickener having higher thickening effect than the first thickener.

4. The ore slurry manufacturing method according to claim 3, wherein a flocculant to be added to the first thickener is adjusted so as to provide the intermediate ore slurry with a solid constituent ratio of 35-40%.
